# EUROPÄISCHE PATENTANMELDUNG

(11) **EP 0 799 812 A1**
(43) Veröffentlichungstag der Anmeldung: **08.10.1997**
(21) Anmeldenummer: 96810208.7
(22) Anmeldetag: 03.04.1996
(51) Int. Cl.: C05F 17/02, B65G 69/18

(54) **Beschickungseinrichtung für eine Vergärungsanlage**

(71) Anmelder: CT Umwelttechnik AG, CH-8404 Winterthur (CH)
(72) Erfinder: Nünlist, Bruno, CH-8546 Kefikon (CH); Wetter, Rolf, CH-8357 Guntershausen (CH); Caviezel, Mario, CH-8425 Oberembrach (CH)
(74) Vertreter: Heubeck, Bernhard

(57) **Zusammenfassung**

Die Beschickungsvorrichtung (10) für eine Vergärungsanlage (100) zum Vergären von organischen Abfällen (99) umfasst eine stationäre Ladeeinrichtung (1) der Anlage (100) und einen transportierbaren, an die Ladeeinrichtung ankoppelbaren Behälter (2). Der Behälter ist für das Zuführen der Abfälle zu der Anlage vorgesehen; die Ladeeinrichtung enthält mechanische Mittel (11) für einen steuerbar dosierten Weitertranport der Abfälle in die Anlage. Der Behälter umfasst separate, verschliessbare Öffnungen (21, 222) für das Füllen bzw. Entleeren. Die Entleerungsöffnung (222) ist einem Entleerungsausgang (22) des Behälters zugeordnet und die Ladeeinrichtung weist eine Aufnahmeöffnung (12) auf, die dem Entleerungsausgang angepasst sowie derart ausgebildet ist, dass nach dem Ankoppeln des Behälters an die Ladeeinrichtung der Innenraum der Anlage im wesentlichen von der Umgebung abgeschlossen ist.

## Beschreibung

Die Erfindung betrifft eine Beschickungseinrichtung für eine Vergärungsanlage sowie ein Verfahren zum Betreiben der Vorrichtung.

Es ist beispielsweise aus der CH-PS 662 339 (= P.5917) eine anaerobe Behandlung von hochbelasteten Abwässern bekannte, bei der die organischen Inhaltsstoffe durch Vergärung teilweise in Biogas (rund 2/3 Methan, 1/3 Kohlendioxid) umgewandelt werden. Dieses Verfahren kann in ähnlicher Weise verwendet werden für die Behandlung von organischen Abfällen, die in der Landwirtschaft (z.B. pflanzliche Abfälle oder Gemische mit Tierexkrementen) oder in Gärten ("Grüngut") anfallen. Da sich das Verfahren in einer Vergärungsanlage, die gegen die Umgebung abgeschlossen ist, durchführen lässt, ist eine Geruchsbelästigung vermeidbar. Es sind dabei allerdings verschiedene Massnahmen zu treffen, beispielsweise die Behandlung von Abgasen in Biofiltern, in denen organische Stoffe, die Ursache für Geruchsbelästigungen sind, durch Mikroorganismen abgebaut werden.

Eine Quelle übel riechender Stoffe ist der zu behandelnde Abfall bei der Beschickung der Vergärungsanlage. Es ist Aufgabe der Erfindung, Massnahme zu schaffen, mit denen Geruchsbelästigungen bei der Beschickung ganz oder zumindest weitgehend eliminierbar sind. Diese Aufgabe wird durch die in Anspruch 1 definierte Beschickungsvorrichtung gelöst.

Die abhängigen Ansprüche 2 bis 5 beziehen sich auf einen ersten Typ der erfindungsgemässen Vorrichtung. Anspruch 6 betrifft einen zweiten Typ. Gegenstand der Ansprüche 7 bis 9 ist das Verfahren zum Betreiben der erfindungsgemässen Vorrichtung. Anspruch 10 bezieht sich auf eine Anwendung des Verfahrens.

Nachfolgend wird die Erfindung anhand der Zeichnungen erläutert. Es zeigen:
- Fig. 1: eine Beschickungsvorrichtung des ersten Typs vor dem Ankoppeln des Behälters an die Ladeeinrichtung,
- Fig. 2: dieselbe Vorrichtung nach dem Ankoppeln,
- Fig. 3: eine Variante zu dem Behälter der Fig. 1 und 2,
- Fig. 4: ein Schrägbild der Ladeeinrichtung,
- Fig. 5: eine schematische Darstellung der Ladeeinrichtung und der an diese anschliessenden Eintrittskomponenten der Vergärungsanlage und
- Fig. 6: einen Längsschnitt durch einen Behälter zu einer erfindungsgemässen Vorrichtung des zweiten Typs.

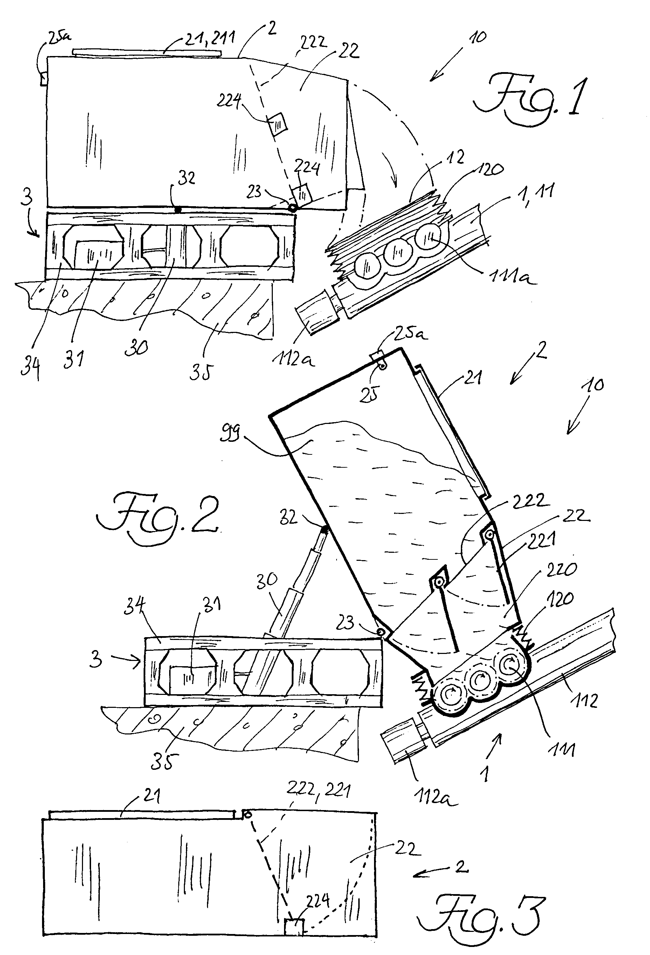

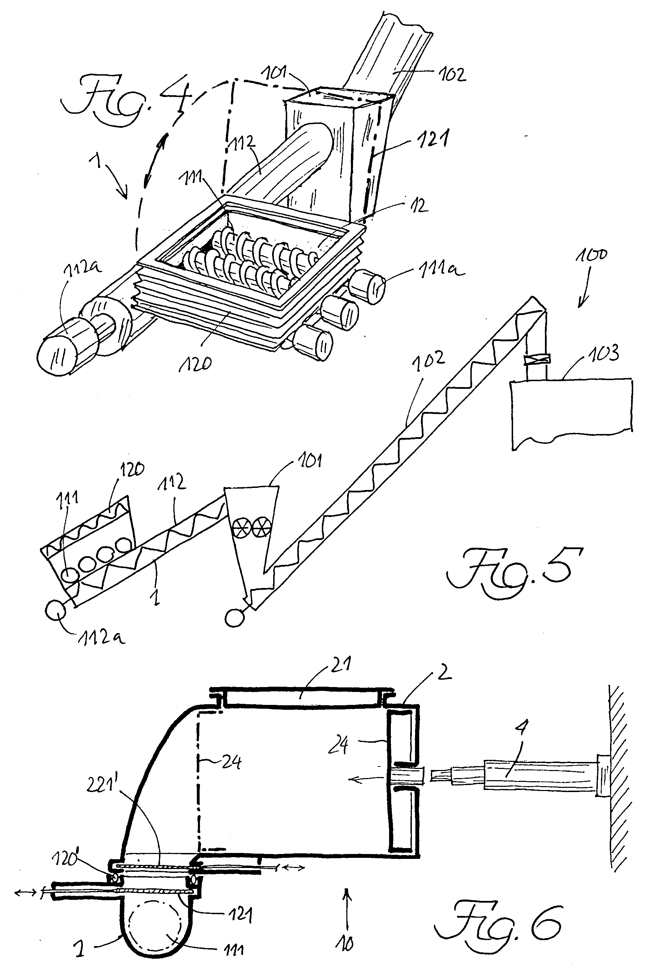

Die in den Figuren 1 und 2 gezeigte Vorrichtung 10 ist zum Beschicken einer nicht dargestellten Vergärungsanlage 100 (vgl. Fig. 5) zum Vergären von organischen Abfällen 99 vorgesehen. Die Vorrichtung 10 umfasst eine stationäre Ladeeinrichtung 1, die Teil der Anlage 100 ist, und einen transportierbaren, an die Ladeeinrichtung 1 ankoppelbaren Behälter 2. Mit diesem Behälter 2 werden die bei einem Erzeuger gesammelten Abfälle 99 zu der Anlage transportiert und ihr zugeführt. Die Ladeeinrichtung 1 enthält mechanische Mittel 11, nämlich mit Motoren 111a antreibbare Förderschrauben 111, mit welchen sich die Abfälle 99 steuerbar dosiert in die Anlage weiterfördern lassen. Der Behälter 2 weist separat angeordnete, verschliessbare Öffnungen 21 und 222 für das Füllen bzw. Entleeren auf.

Die Entleerungsöffnung 222 ist Teil eines Entleerungsausgangs 22. Die Aufnahmeöffnung 12 der Ladeeinrichtung 1 ist dem Entleerungsausgang 22 angepasst und derart ausgebildet, dass nach dem Ankoppeln des Behälters 2 an die Ladeeinrichtung 1 der Innenraum der Anlage im wesentlichen von der Umgebung abgeschlossen ist. Mit einer balgartigen Abdichtung 120 werden Geruchsemissionen unterbunden. Selbstverständlich lassen sich auch andere, insbesondere weniger flexible Mittel zum Abdichten vorsehen.

Die Öffnung 21 ist zum Einfüllen der Abfälle 99 in den Behälter 2 vorgesehen. Sie ist mit einem Deckel 211 verschliessbar. Die Öffnung 222 des Entleerungsausgangs 22 ist durch zwei verschwenkbare und verriegelbare Klappen 221 verschliessbar. Die Verriegelung bzw. Entriegelung der Klappen lässt sich beispielsweise manuell an den schematisch angedeuteten Einrichtungen 224 vornehmen.

Die Verschliessungsmittel (Deckel 211, Klappen 221 der Öffnungen 21 und 222) müssen den Behälterinhalt von der Umgebung soweit trennen, dass Geruchsbelästigungen unterbleiben oder zumindest weitgehend unterbunden sind.

Eine Kippeinrichtung 3 ist bei der Aufnahmeöffnung 12 der Ladeeinrichtung 1 für das Ankoppeln und Entleeren des Behälters 2 angeordnet. Sie umfasst folgende Komponenten: teleskopartige Hydraulikzylinder 30, einen Hydraulikantrieb 31, eine Verbindungsstelle 32 und einen Tisch 34 auf einem Fundament 35. Beim Kippen dreht sich der Behälter 2 um die Achse 23. Für den Kippwinkel ist ein Wert im Bereich zwischen rund 30 und 90° vorzusehen, wobei mit Vorteil ein Wert zwischen 50 und 70° gewählt wird. Bei grossem Kippwinkel ist ein grosser Raumbedarf über der Kippeinrichtung 3 nötig (Halle mit hoher Decke). Bei kleinem Kippwinkel ist die Schwerkraft weniger wirkungsvoll.

Der Behälter 2 wird von der Sammelstelle mit verriegelter Klappe 221 zur Anlage 100 transportiert und an diese durch Kippen angekoppelt. Nach dem Ankoppeln werden die Klappen 221 entriegelt, so dass sich die Klappen 221 aufgrund der Schwerkraft in eine abfallfreie Zwischenkammer 220 verschwenken können. Der Inhalt 99 kann nun durch die frei gelegten Öffnungen 222 in die Ladeeinrichtung 1 gleiten. Durch Einspritzen von Wasser über eine Düse 25 (Wasseranschluss 25a) lässt sich der Transport der Abfälle 99 unterstützen. Es kann auch vorteilhaft sein, Wasser in die Ladeeinrichtung 1 einzuspritzen.

Das Schrägbild der Fig.4 zeigt die Ladeeinrichtung 1 der Figuren 1 und 2 mit drei Förderschrauben 111 (eine durch die Abdichtung 120 verdeckt). Statt drei können beispielsweise auch vier- siehe Fig. 5 - Förderschrauben 111 vorgesehen sein. Die Aufnahmeöffnung 12 muss auch mit einem Deckel 121, der strichpunktiert angedeutet ist, verschliessbar sein, um Geruchsbelästigungen beim Wechseln des Behälters (oder auch bei Leerstand / Stillstand der Anlage) verhindern zu können. Der Deckel 121 kann beispielsweise mittels eines Motors oder manuell verschwenkt werden.

Mit den oder einzelnen der Förderschrauben 111 der Ladeeinrichtung 1 werden die zu behandelnden Abfälle 99 aus der Aufnahmeöffnung 12 seitlich in einen Förderer 112 (Antrieb 112a) weitertransportiert. In der Regel ist jeweils nur eine der Förderschrauben 111 in Betrieb. Über den Förderer 112 - siehe die Figuren 4 und 5 - gelangen die Abfälle 99 in einen Zerkleinerer 101 und von dort über einen weiteren Förderer 102 in einen ersten Reaktor 103 der Vergärungsanlage 100.

Enthalten die Abfälle 99 sehr wenig Wasser, so bilden sie eine nicht oder schwer fliessfähige Masse. In diesem Fall kann ein unterteilter Entleerungsausgang 22, wie in Fig.2 zu sehen, zu einer starken Behinderung der Entleerung führen. Liegt keine derartige Unterteilung vor und ist die Öffnung 222 des Entleerungsausgangs 22 zumindest angenähert gleich gross wie die Querschnittsfläche des Behälters 2, wie dies für den Behälter der Fig.3 gilt, so fallen die Entleerungsprobleme weg.

Bei der oben beschriebenen Beschickungsvorrichtung 10 wird die Entleerung des Behälters unter Nutzung der Schwerkraft durchgeführt. Es ist auch möglich, im Behälter 2 mechanische Mittel vorzusehen, mit welchen die zu behandelnden Abfälle zu dem Entleerungsausgang 22 förderbar sind. Fig.6 zeigt einen derartigen Typ der Beschickungsvorrichtung 10. Mit einem verschiebbaren Wandstück 24 (vordere Stellung strichpunktiert angedeutet) und unter Verwendung einer hydraulischen Einrichtung 4 lässt sich der Behälterinhalt zum Entleerungsausgang 22 drücken. Bei geöffneten Verschlussschiebern 221' und 121 sinkt der Behälterinhalt in die Ladeeinrichtung 1, aus der er durch die Förderschraube 111 weiter in die nicht dargestellte Anlage transportiert wird. Eine Dichtung 120' am oberen Rand der Ladeeinrichtung 1 sorgt für den Abschluss des Anlageninnenraums gegen die Umgebung.

Es sind anstelle der beweglichen Wand 24 auch andere mechanische Mittel möglich: beispielsweise ein Kratzboden im Behälter 2 mit Kettenförderern; oder eine im Behälter eingebaute Förderspirale im Zusammenspiel mit Lockerungsmitteln, die am Behälterboden hin- und herbewegbar sind. Mit derartigen Mitteln lässt sich gleichzeitig die dosierte Zufuhr der Abfälle in die Vergärungsanlage vornehmen.

## Patentansprüche

1. Beschickungsvorrichtung (10) für eine Vergärungsanlage (100) zum Vergären von organischen Abfällen (99), eine stationäre Ladeeinrichtung (1) der Anlage (100) und einen transportierbaren, an die Ladeeinrichtung ankoppelbaren Behälter (2) umfassend,
bei welcher Beschickungsvorrichtung erstens der Behälter für das Zuführen der Abfälle zu der Anlage vorgesehen ist und die Ladeeinrichtung mechanische Mittel (11) für einen steuerbar dosierten Weitertranport der Abfälle in die Anlage enthält,
zweitens der Behälter separate, verschliessbare Öffnungen (21, 222) für das Füllen bzw. Entleeren umfasst, die Entleerungsöffnung (222) einem Entleerungsausgang (22) des Behälters zugeordnet ist und die Ladeeinrichtung eine Aufnahmeöffnung (12) aufweist, die dem Entleerungsausgang angepasst sowie derart ausgebildet ist, dass nach dem Ankoppeln des Behälters an die Ladeeinrichtung der Innenraum der Anlage im wesentlichen von der Umgebung abgeschlossen ist.

2. Vorrichtung nach Anspruch 1, dadurch gekennzeichnet, dass der Entleerungsausgang (22) des Behälters (2) durch mindestens eine verschwenkbare und verriegelbare Klappe (221) verschliessbar ist und dass bei der Aufnahmeöffnung der Ladeeinrichtung (1) eine Kippeinrichtung (3) für das Ankoppeln und Entleeren des Behälters angeordnet ist.

3. Vorrichtung nach Anspruch 2, dadurch gekennzeichnet, dass nach dem Ankoppeln der Behälter (2) um einen Winkel zwischen rund 50 und 70° gekippt ist.

4. Vorrichtung nach einem der Ansprüche 1 bis 3, dadurch gekennzeichnet, dass in der Ladeeinrichtung (2) mindestens eine mit einem Motor (111a) antreibbare Förderschraube (111) für den Transport und die Dosierung der Abfälle (99) angeordnet ist.

5. Vorrichtung nach einem der Ansprüche 1 bis 4, dadurch gekennzeichnet, dass der Behälter (2) für den Transport von nicht oder schwer fliessfähigen organischen Abfällen (99) vorgesehen ist und dass die Öffnung (222) des Entleerungsausgangs (22) nicht unterteilt ist und zumindest angenähert gleich gross wie die Querschnittsfläche des Behälters ist.

6. Vorrichtung nach Anspruch 1, dadurch gekennzeichnet, dass im Behälter (2) mechanische Mittel (24) vorgesehen sind, mit welchen die zu behandelnden Abfälle zu dem Entleerungsausgang (22) förderbar sind.

7. Verfahren zum Beschicken einer Vergärungsanlage (100) mit einer Vorrichtung (10) gemäss einem der Ansprüche 1 bis 6, dadurch gekennzeichnet, dass organische Abfälle (99) bei den Erzeugern der Abfälle in dem Behälter (2) gesammelt werden, dass der gefüllte Behälter zu der Vergärungsanlage transportiert und an diese weitgehend dicht angeschlossen wird, und dass der Behälter entladen wird, wobei die zu behandelnden Abfälle mit der Ladeeinrichtung (1) dosiert von dem Behälter in die Anlage gefördert werden.

8. Verfahren nach Anspruch 7 unter Verwendung einer Vorrichtung (10) nach Anspruch 2, dadurch gekennzeichnet, dass der Behälter (2) mit verriegelter Klappe (221) des Entleerungsausgangs (22) zur Anlage (100) transportiert und an diese durch Kippen angekoppelt wird und dass nach dem Ankoppeln die Klappe entriegelt wird, so dass der Inhalt des Behälters in die Ladeeinrichtung (1) gleiten kann.

9. Verfahren nach Anspruch 8, dadurch gekennzeichnet, dass durch Einspritzen von Wasser in den Behälter (2) und/oder in die Ladeeinrichtung (1) der Transport des Abfalls unterstützt wird.

10. Anwendung des Verfahrens gemäss einem der Ansprüche 7 bis 9 zum Vergären von pflanzlichen Abfällen, beispielsweise aus Gärten, und/oder von in der Landwirtschaft anfallenden organischen Abfällen, beispielsweise von Tierexkremente enthaltenden Gemischen.
